Europäisches Patentamt

European Patent Office

Office européen des brevets

(11) Veröffentlichungsnummer : **0 087 731**
**B1**

(12) **EUROPÄISCHE PATENTSCHRIFT**

(45) Veröffentlichungstag der Patentschrift :
10.09.86

(21) Anmeldenummer : 83101699.3

(22) Anmeldetag : 22.02.83

(51) Int. Cl.⁴ : **G 01 F 11/06**

(54) Dosiergerät zur Abgabe von Flüssigkeit aus einer Flasche.

(30) Priorität : 22.02.82 DE 3206307
09.03.82 DE 3208436

(43) Veröffentlichungstag der Anmeldung :
07.09.83 Patentblatt 83/36

(45) Bekanntmachung des Hinweises auf die Patenterteilung : 10.09.86 Patentblatt 86/37

(84) Benannte Vertragsstaaten :
AT BE CH DE FR GB IT LI LU NL SE

(56) Entgegenhaltungen :
DE-A- 2 343 687
DE-A- 2 702 539
DE-A- 3 031 830
FR-A- 2 398 289
US-A- 3 729 022
US-A- 3 802 608

(73) Patentinhaber : **Glasgerätebau Hirschmann**
**Hauptstrasse 7-15**
**D-7101 Eberstadt (DE)**

(72) Erfinder : **Hischmann, Adolf M.**
**Hundsbergstrasse 11**
**D-7100 Heilbronn (DE)**
Erfinder : **Käser, Klaus**
**Hühnerbergweg 11**
**D-7102 Weinsberg (DE)**
Erfinder : **Rieker, Hans**
**Holderstrasse 44**
**D-7101 Eberstadt (DE)**
Erfinder : **Busch, Hans-Peter**
**Schlegelstrasse 11**
**D-7100 Heilbronn (DE)**
Erfinder : **Rathke, Willi**
**Schulstrasse 14**
**D-7101 Erlenbach (DE)**
Erfinder : **Maul, Heinz Peter**
**Oststrasse 17**
**D-7101 Eberstadt (DE)**

(74) Vertreter : **Lorenz, Eduard et al**
**Rechtsanwälte Lorenz, Eduard - Seidler, Bernhard**
**Seidler, Margrit - Gossel, Hans-K. Philipps, Ina, Dr.**
**Widenmayerstrasse 23**
**D-8000 München 22 (DE)**

## Beschreibung

Die Erfindung bezieht sich auf ein Dosiergerät zur Abgabe von Flüssigkeit aus einer Flasche nach dem Oberbegriff des Patentanspruchs 1.

Ein derartiges Dosiergerät ist aus der DE-A-23 43 687 bekannt. Der (höhen-) gleichbleibende Anschlag befindet sich an dem dem Ventilblock abgewandten Ende des Zylinders. Die Zylinderhülse hat einen etwa dem Verstellbereich des Kolbenhubes entsprechenden Längsschlitz, in welchem der verstellbare Anschlag angeordnet und mittels einer Arretierschraube an der Zylinderhülse durch eine segmentartige Ausbildung von außen verstell- und einstellbar ist. Bei diesem bekannten Flaschendosiergerät hängen Genauigkeit (= Streuung um den Mittelwert bei bestimmter Richtigkeit) und Richtigkeit (= Abweichung des Mittelwertes vom Nominalwert der Skala) immer von der Justage des am Ende des Zylinders angeordneten, (höhen-) gleichbleibenden Anschlags (= aufgeschrumpften Stopprings) ab. Verändert sich die Lage des Glaszylinders im Ventilblock der Höhe nach, so stimmt die Justage zur aufgedruckten Skala oder der gespritzten Zahnleiste nicht mehr. Dasselbe gilt für ein Verrutschen dieses Anschlags. Es besteht ferner die Gefahr, daß die Arretierschraube sich, besonders nach längerem Gebrauch, lockert und infolgedessen auch der Klemmsitz des Anschlagkörpers in dem Längsschlitz der Zylinderhülse locker wird. Der verschraubbare, verstellbare Anschlag ist also nicht gut geführt. Allein dadurch kann jede Einstellung eine qualitative veränderte Richtigkeit und Reproduzierbarkeit in der Serie haben. Ein weiterer Nachteil besteht darin, daß die Arretierschraube bei jeder Änderung der gewünschten Flüssigkeitsmenge zuerst gelöst und nachher wieder angezogen werden muß. Es schleicht sich infolgedessen außer veränderlichen Systemfehlern auch noch der indivuelle Fehler ein. Das bekannte Dosiergerät ist also mit erheblichen Fehlerquellen behaftet.

Aufgabe der Erfindung ist es, bei einem Dosiergerät der hier in Rede stehenden Gattung unter Vereinfachung der Konstruktion die Richtigkeit, die Genauigkeit und die Reproduzierbarkeit zu verbessern, indem sie einerseits von der subjektiven Zuverlässigkeit der Bedienungsperson unabhängig gemacht wird und andererseits die veränderbare Einstellung einer jeweils richtig reproduzierten Flüssigkeitsmenge vereinfacht sowie beschleunigt wird.

Erfindungsgemäß wird diese Aufgabe gelöst durch die kennzeichnenden Merkmale des Patentanspruchs 1. Dadurch, daß der Gegenanschlag als Stufenlehre ausgebildet ist und daß der verstellbare Anschlag mit dem Zylinder axial unbeweglich verbunden ist, kann das erfindungsgemäße Dosiergerät ohne lösbare Anschläge auskommen. Somit ist ein sicheres Wiederfinden einer bestimmten Hubhöhe gewährleistet. Dadurch, daß der verstellbare Anschlag in Umfangsrichtung des Geräts verdrehbar ist, ist eine Veränderung der Hubbegrenzung möglich. Da bei dem Flaschendosiergerät gemäß der DE-A-23 43 687 der Anschlag einjustiert werden muß und sich diese Justage verstellen kann, ist auch bei der Zahnleistenversion keine absolute Sicherheit für die Reproduzierbarkeit gegeben. Bei dem erfindungsgemäßen Dosiergerät ist durch die verdrehgesicherte Stufenlehre und dem gerasteten, oberen Anschlag in Verbindung mit den rechtwinklig zur Hubkraftrichtung verlaufenden Anschlagflächen keine Kraftkomponente vorhanden, die in Richtung der Stufenlehre verläuft. Die erfindungsgemäße Ausbildung des Gegenanschlags als Stufenlehre vermittelt den Vorteil einer höheren Richtigkeit der Reproduzierbarkeit der gewünschten Flüssigkeitsmenge gemäß dem Digital-System. Die Richtigkeit der Einstellung der zu reproduzierenden Flüssigkeitsmenge hängt also nicht mehr von der verschiedenen subjektiven Genauigkeit der jeweiligen Bedienungsperson ab. Die Konstruktion ist rationeller, da sie der Fügetechnik folgt, so daß Klebstoffe und/oder Schrauben entfallen, welche beim Service Werkzeuge erforderlich machen, die in einem Labor in der Regel nicht vorhanden sind. Der Anschlag der erfindungsgemäßen Anschlagkörper erfolgt gegen ruhende Stufenflächen. Die erfindungsgemäßen Anschlagkörper sind infolgedessen in sehr hohem Maße verschleißfest. Als Werkstoff hat sich Polyphenylensulfid bewährt, das zu 40 % mit Glasfasern verstärkt und spritzbar ist sowie eine definierte Schrumpfung von 0,2 % hat. Ein weiterer Vorteil ist die daraus folgende Service-Erleichterung. Die Vereinfachung und Beschleunigung der veränderten Einstellung einer jeweils richtig reproduzierten Flüssigkeitsmenge folgt im Vergleich zur DE-A-23 43 687 daraus, daß die Anschlagkörper einfach gegenseitig einrasten, ohne daß jeweils das Lösen und Wiederanziehen einer nicht gut geführten Arretierschraube erforderlich wäre.

Aus der DE-A-2 702 539 ist eine Vorrichtung zur Abgabe von Flüssigkeit in genau vorherbestimmter Menge bekannt, die eine drehbare Hülse und an ihr abgesetzte Stufen aufweist, wobei in einer gewählten Stellung eine der Stufen mit einem den Abwärtshub eines Kolbens begrenzenden Anschlag zusammenwirkt. Weiterhin ist die Hülse mit 10 zugehörigen Kerben oder Rasten ausgebildet, in die ein Zeiger als nachgiebiges Rastglied einrastet. Die für die Feineinstellung vorgesehenen Anschlagstufen sind dabei axial unbeweglich mit dem Kolben verbunden ; sie befinden sich jedoch nicht in dem Ringraum zwischen dem Zylinder und der Zylinderhülse. Weiterhin wird durch den mit dem Kolben axial unbeweglich verbundenen verstellbaren Anschlag bei dem vorbekannten Dosiergerät lediglich die Feineinstellung bewirkt. Eine Überdeckung des gesamten Bereichs der Hubbegrenzung wäre mittels der vorbekannten verstellbaren Stufung nicht zu erreichen, da hierfür die Stufen derart schmal ausgeführt werden müßten, daß eine sichere Auflage auf den Gegenanschlag nicht mehr möglich wäre. Würde man andererseits die Stufen in ihrer dargestellten Breite belassen, ergäbe sich eine unzulässig grobe Einstellung.

Bei der aus der FR-A-2 398 289 vorbekannten Flüssigkeitspipette ist der mittels eines Gewindes verstellbare Anschlag relativ zu dem Zylinder axial beweglich.

Aus der US-A-3 802 608 ist ein Flüssigkeits-Kolbendosierer bekannt, bei dem der Kolbenweg mit einer gestuften Trommel begrenzt wird, die über einen Skalentrieb eingestellt wird. Der verstellbare Anschlag ist als Stufenlehre ausgebildet und auf einem Zylinder axial unbeweglich angeordnet. Bei dem vorbekannten Flüssigkeits-Kolbendosierer ist jedoch kein Ringraum zwischen dem Zylinder und einer Zylinderhülse vorhanden, weshalb der verstellbare, als Stufenlehre ausgebildete Anschlag auch nicht in einem derartigen Ringraum angeordnet ist.

Vorteilhafte Weiterbildungen der Erfindung sind in den Unteransprüchen beschreiben. Daraus, daß der Ventilblock und der Dosierteil über einen Bajonettverschluß verbunden sind, ergibt sich der Vorteil, daß das Gerät ohne Werkzeug zusammen- und auseinandergebaut werden kann.

Die Erfindung ist in der nachstehenden Beschreibung anhand der Zeichnung in einer bevorzugten Ausführungsform beispielhaft erläutert. Es zeigen :

Figur 1 eine Seitenansicht des Flaschendosiergeräts gemäß der Erfindung ;

Figur 2 einen Längsschnitt des Flaschendosiergeräts der Fig. 1 ;

Figur 3 ein Schnitt A-A des Flaschendosiergeräts gemäß Fig. 2 ;

Figur 4 einen Schnitt B-B eines erfindungsgemäßen Flaschendosiergeräts nach Fig. 2 ;

Figur 5 eine Detail-Darstellung zu Schnitt AA des erfindungsgemäßen Flaschendosiergerätes nach Fig. 3.

Das Flaschendosiergerät 1 besteht aus einem oberen Dosierteil 2 und einem unteren Ventilblock 3. Die Ausbildung des Ventilblocks 3 entspricht dem Stand der Technik. Er weist einen verdrehsicheren Innengewindeeinsatz 4 auf, mit dem er auf das Außengewinde am Hals einer nicht dargestellten Flasche aufgeschraubt werden kann. Der Ventilblock 3 umschließt ferner ein Ansaugventil 5 und ein Auslaßventil 6. Vom Ansaugventil 5 ist ein Kanal 7 nach oben geführt, der in der Hohlraum eines Zylinders 8 mündet. Von dem Kanal 7 ist seitlich ein Auslaßkanal 9 abgezweigt, in dem das Auslaßventil 6 angeordnet ist und an dessen äußerem Ende ein Auslaßstutzen 10 vorgesehen ist. Beide Ventile 5, 6 sind als Rückschlagventile ausgebildet. Sowohl das Ansaugventil 5 als auch das Auslaßventil 6 enthalten je eine Ventilkugel 11, 12. Die Ventilkugel 12 des Auslaßventils 6 steht unter dem Druck einer Feder 13. Die Ventilkugel 11 des Ansaugventils 5 ruht normalerweise unter dem Einfluß der Schwerkraft auf ihrem Ventilsitz 14. Die Ventilkugel 12 des Auslaßventils 6 wird mittels der Feder 13 normalerweise auf ihrem Sitz 15 gehalten. Beim Hochziehen des Kolbens 16 hebt sich die Ventilkugel 11 von ihrem Ventilsitz 14 ab, während die Ventilkugel 12 auf ihrem Sitz gehalten ist. Beim anschließenden Abwärtsbewegen des Kolbens 16 zwecks Abgabe der angesaugten Flüssigkeitsmenge über den auslaßstutzen 10 schließt das Ansaugventil 5, während das Auslaßventil 6 öffnet.

In dem Ventilblock 3 ist der Zylinder 8 befestigt. In dem Zylinder 8 ist der Kolben 16 zum Ansaugen und Abgeben einer einstellbaren Flüssigkeitsmenge verstellbar und durch Aufweiten des Glaszylinders abriebgesichert geführt. Eine derartige Ausbildung ist im Stand der Technik deshalb nicht möglich, weil der obere Festanschlag am oberen Ende des Zylinders als Stoppring aufgeschrumpft ist. Fest verbunden mit dem Ventilblock 3 ist ferner eine Schutzhülse 17, welche den Zylinder 8 unter Bildung eines Ringraumes 18 übergreift. In dem Ringraum zwischen dem Zylinder 8 und der Schutzhülse 17 sind ein zwecks Veränderung der Hubbegrenzung und damit der anzusaugenden und abzugebenden Flüssigkeitsmenge verstellbarer Anschlag sowie ein mit ihm zusammenwirkender Gegenanschlag angeordnet.

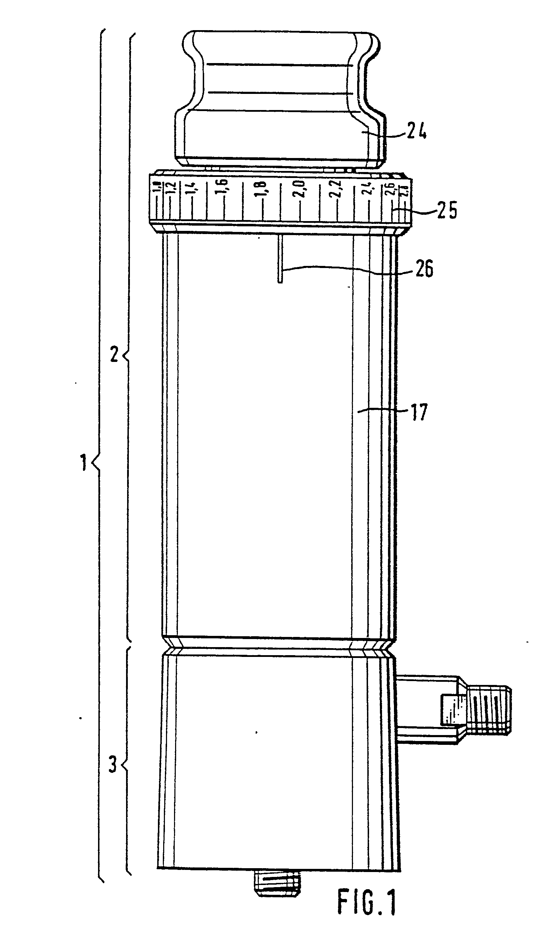

Der obere, verstellbare Anschlag ist an einem Verstellring 20 ausgebildet, der am oberen Umfangsrand der mit dem Ventilblock 3 fest verbundenen und damit als Schutzhülse 17 für den Zylinder 8 ausgebildeten Zylinderhülse aufgesetzt ist. Am Innendurchmesser des Verstellrings 20 ist der obere, verstellbare Stufenkörper 21 angespritzt. Der Verstellring 20 trägt, wie sich am besten aus Fig. 1 ergibt, einen Skalenring 25, der verdrehsicher ausgebildet ist.

Der Gegenanschlag ist an einer Stufenlehre 19 ausgebildet, die auf einem unteren Anschlag 23 in der Schutzhülse 17 aufliegt und mittels zweier Nasen 22 in zwei Längsnuten 29, 30 der Schutzhülse 17 verdrehsicher geführt ist. Die Stufenlehre 19 ist mit vierzig Stufen à 3 mm Breite ausgebildet. Dadurch können 110 mm Umfangslänge für die Skalenlänge ausgenutzt werden. Das hat den Vorteil einer feineren Auflösung der Skaleneinteilung. Gleichwohl kann mit nur einer Umdrehung der ganze Skalenbereich überstrichen werden.

Das eingestellte Volumen ist durch den Hub zwischen dem jeweiligen Anschlagkörper der Stufenlehre 19 und dem Stufenkörper 21 des Verstellrings 20 gegeben. Die Stufenlehre 19 und der Kolben 16 sind über einen gemeinsamen Griff 24 verbunden, so daß die Stufenlehre 19 mit dem Griff 24 hochgezogen werden kann.

Die Anschlagflächen der Anschlagkörper 19, 21 verlaufen rechtwinklig zur Hubkraftrichtung. Sie bestehen aus glasfaserverstärktem Polyphenylensulfid.

Mit dem Verstellring 20 wird durch einfaches Drehen das gewünschte Volumen, das am Skalenring 25 angezeigt ist, mit einer Einstellmarke 26 auf der Schutzhülse 17 zur Deckung gebracht.

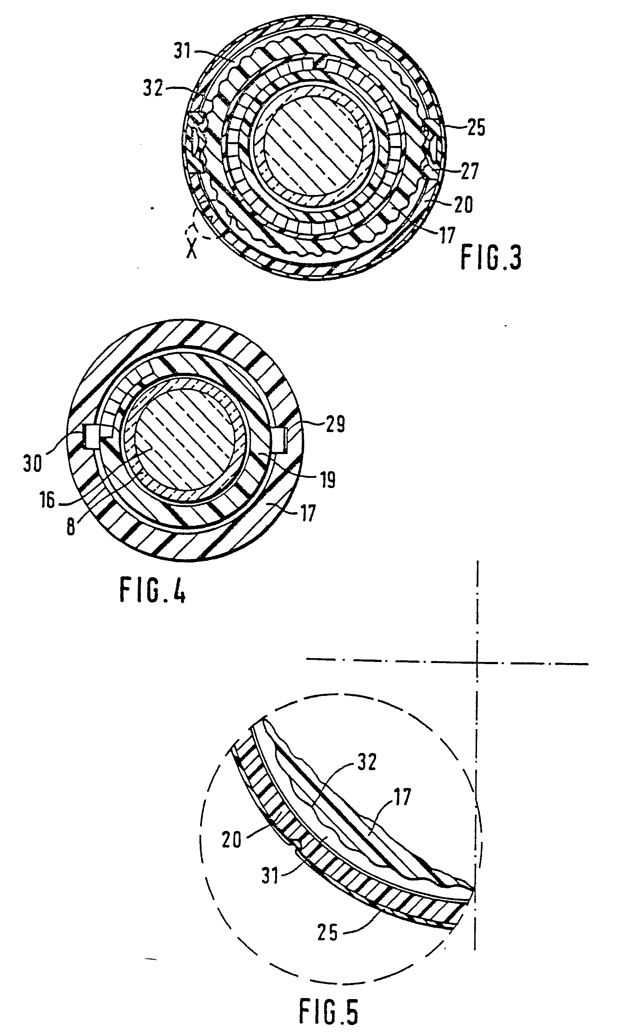

Bei jeder auf dem Skalenring 25 ausgewiesenen Flüssigkeitsmenge greifen zwei um 180° versetzt, in Durchbrüchen des Verstellrings 20 angeordnete und vom Skalenring 25 nach außen abgedeckte Federkörper 27 in Ausbuchtungen ein, die in einem wellenförmig ausgebildeten Boden 32 einer gegenüberliegenden Nut 31 der Schutzhülse 17 geformt sind, wie sich am besten aus Fig. 3 und Fig. 5 ergibt. Zur verbesserten Reproduzierbarkeit der eingestellten Flüssigkeitsmengen sind also die Teile Stufenlehre 19, Schutzhülse 17, Verstellring 20 und Skalenring 25 verdrehsicher miteinander verbunden.

Der Dosierteil 2 und der Ventilblock 3 sind über einen Bajonettverschluß verbunden. Das gesamte Flaschendosiergerät 1 ist infolgedessen so aufgebaut, daß es ohne Werkzeug zusammen- und auseinandergebaut werden kann.

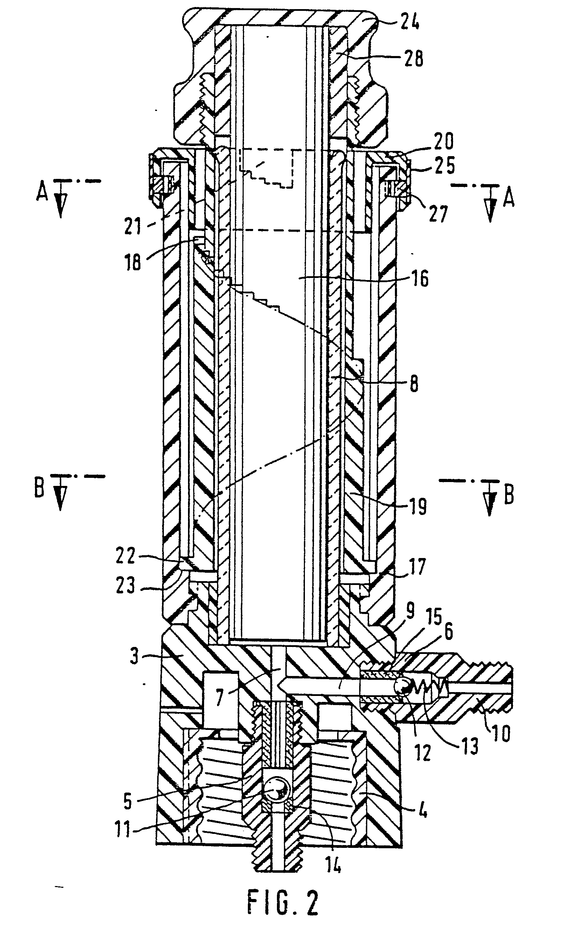

Der Kolben 16 ist zwecks Verbesserung der Laufeigenschaften und der damit verbundenen Genauigkeit aus Borosilikatglasrohr hergestellt und nach entsprechender Oberflächenvorbehandlung mit einer Poly-vinylidenfluoridschicht elektrostatisch überzogen. Die Schicht ist höchst resistent gegen Chemikalien aller Art und nicht porös wie Teflonschichten. Sie besitzt außerdem eine wesentlich höhere Abriebfestigkeit. Nach der Pulverbeschichtung wird der Kolben mit einer Genauigkeit fertiggeschliffen, die die Austauschbarkeit mit dem ebenfalls aus kalibriertem Borosilikatglas gefertigten Zylindern 8 gewährleistet. Der Zylinder 8 ist, wie sich aus Fig. 2 ergibt, am oberen Ende aufgeweitet und ist dort flammpoliert, damit jede Beschädigung des Kolbens 16 vermieden wird. Aus dem gleichen Grund, aber auch aus spritztechnischen Gründen erfolgt auch die Verbindung der Stufenlehre 19 über den Griff 24 mit dem Kolben 16 unter Zwischenschaltung eines elastischen, muffenförmigen Paßstücks 28, das aus Polyäthylen hergestellt ist. Erfindungsgemäß sind also der obere, drehbare Festanschlag 20, 21 und der untere, an der Stufenlehre 19 ausgebildete Gegenanschlag über die Schutzhülse 17 so verbunden, daß der einmal festgelegte untere und obere Anschlag unveränderlich sind. Deren Abstand ist nur mit dem Spiel der Passungen behaftet, das unter 0,1 % des Gesamthubes ist. Der Grund für die erheblichen Fehlerquellen (veränderliche Systemfehler plus individuelle Fehler) des Standes der Technik ist die konstruktive Zusammenschaltung der Funktionselemente, die keine als starr anzusehende Einheit darstellen. Das Gerät nach der DE-PS-23 43 687 in seiner Ausführungsform mit Zahnleisten hat zwar gleichfalls bereits eine digitale Ausführung zum Gegenstand. Die unveränderliche Lage der digital arbeitenden Teile des erfindungsgemäßen Geräts zueinander stellt sich aber, wie dargelegt, als ein grundsätzlicher Unterschied dar.

## Patentansprüche

1. Dosiergerät (1) zur Abgabe von Flüssigkeiten aus einer Flasche mit einem in einem Zylinder (8) verstellbar geführten Kolben (16) zum Ansaugen und Abgeben einer einstellbaren Flüssigkeitsmenge, bei welchem der Zylinder (8) an einem ein Ansaugventil (5) sowie ein Auslaßventil (6) umschließenden Ventilblock (3) befestigt und unter Bildung eines Ringraumes (18) von einer Zylinderhülse (17) übergriffen ist, und bei welchem in dem Ringraum zwischen dem Zylinder (8) und der Zylinderhülse (17) ein zwecks Veränderung der Hubbegrenzung und damit der anzusaugenden sowie abzugebenden Flüssigkeitsmenge verstellbarer Anschlag (21) sowie ein mit ihm zusammenwirkender Gegenanschlag (19) angeordnet sind, wobei der verstellbare Anschlag (21) mittels einer elastischen Rasteinrichtung (27) in jeder von mehreren Einstellagen festlegbar ausgebildet ist, dadurch gekennzeichnet, daß der Gegenanschlag als Stufenlehre (19) ausgebildet ist und daß der verstellbare Anschlag (21) mit dem Zylinder (8) axial unbeweglich verbunden und zwecks Veränderung der Hubbegrenzung in Umfangsrichtung dieses Geräts (1) verdrehbar ist.

2. Dosiergerät nach Anspruch 1, dadurch gekennzeichnet, daß der verstellbare Anschlag (21) an einem Verstellring (20) ausgebildet ist, der am oberen Umfangsrand der mit dem Ventilblock (3) fest verbundenen und damit als Schutzhülse (17) für den Zylinder (8) ausgebildeten Zylinderhülse aufgesetzt ist.

3. Dosiergerät nach Anspruch 2, dadurch gekennzeichnet, daß der Verstellring (20) einen verdrehsicheren Skalenring (25) trägt.

4. Dosiergerät nach Anspruch 3, dadurch gekennzeichnet, daß bei jeder auf dem Skalenring (25) ausgewiesenen Flüssigkeitsmenge zwei um 180° versetzte, in Durchbrüchen des Verstellrings (20) angeordnete Federkörper (27) in Ausbuchtungen eingreifen, die in einem wellenförmig ausgebildeten Boden (32) einer gegenüberliegenden Nut (31) der Schutzhülse (17) geformt sind.

5. Dosiergerät nach einem der Ansprüche 1 bis 4, dadurch gekennzeichnet, daß die als Gegenanschlag ausgebildete Stufenlehre (19) mittels zweier Nasen (22) in zwei Längsnuten (29, 30) der Schutzhülse (17) verdrehungssicher geführt ist.

6. Dosiergerät nach einem der vorhergehenden Ansprüche, dadurch gekennzeichnet, daß die Anschlagflächen der Anschlagkörper (19, 21) rechtwinklig zur Hubkraftrichtung verlaufen.

7. Dosiergerät nach einem der vorhergehenden Ansprüche, dadurch gekennzeichnet, daß die Anschlagkörper (19, 21) aus glasfaserverstärktem Polyphenylensulfid bestehen.

8. Dosiergerät nach einem der vorhergehenden Ansprüche, dadurch gekennzeichnet, daß der Zylinder (8) aus kalibriertem Borosilikatglas besteht und am oberen Ende aufgeweitet sowie flammpoliert ist.

9. Dosiergerät nach einem der vorhergehenden Ansprüche, dadurch gekennzeichnet, daß der Ventilblock (3) und der Dosierteil (8, 16, 17, 19, 20, 21, 24) über einen Bajonettverschluß verbunden sind.

## Claims

1. A batching device (1) for dispensing liquids from a bottle, comprising a piston (16), which is adjustably guided in a cylinder (8) and·serves to suck and discharge an adjustable quantity of liquid, wherein the cylinder (8) is secured to a valve block (3), which encloses a suction valve (5) and a discharge valve (6), said cylinder is surrounded by a cylindrical sleeve (17), which defines an annular space (18) with the cylinder, the annular space between the cylinder (8) and the cylindrical sleeve (17) contains a stop, which is adjustable to change the stroke limit and the quantity of liquid to be sucked and to be discharged, and a countersop (19), which cooperates with said stop, and the adjustable stop (21) is adapted to be fixed in each of a plurality of adjusted positions by means of an elastic detent (27), characterized in that the counterstop consists of a stepped gauge (19) and the adjustable stop (21) is axially immovably connected to the cylinder (8) and is rotatable in the peripheral direction of that device (1) in order to change the stroke limit.

2. A batching device according to claim 1, characterized in that the adjustable stop (21) is formed on an adjusting ring (20), which is mounted on the upper peripheral rim of the cylindrical sleeve, which is firmly connected to the valve block (3) to constitute a sleeve (17) for protecting the cylinder (8).

3. A batching device according to claim 2, characterized in that the adjusting ring (20) carries a non-rotatable scale ring (25).

4. A batching device according to claim 3, characterized in that two spring members (27) are associated with each quantity of liquid indicated on the scale ring (25) and are spaced 180° apart and disposed in apertures of the adjusting ring (20) and extend into depressions formed in bottom (32) of an opposite groove (31) of the protective sleeve (17).

5. A batching device according to any of claims 1 to 4, characterized in that the stepped gauge (19) which constitutes a counterstop is guided by means of two noses (22) in two longitudinal grooves (29, 30) of the protective sleeve (17) so as to be held against rotation.

6. A batching device according to any of the preceding claims, characterized in that the stop faces of the stop members (19, 21) extend at right angles to the direction of the stroke-imparting force.

7. A batching device according to any of the preceding claims, characterized in that the stop members (19, 21) consist of glass fibre-reinforced polyphenylene sulfide.

8. A batching device according to any of the preceding claims, characterized in that the cylinder (8) consists of calibrated borosilicate glass and is flared and flame-polished at its upper end.

9. A batching device according to any of the preceding claims, characterized in that the valve block (3) and the batching portion (8, 16, 17, 19, 20, 21, 24) are interconnected by a bayonet joint.

## Revendications

1. Dispositif de dosage (1) pour délivrer un liquide d'une bouteille, comportant un piston (16) réglable guidé dans un cylindre (8) pour aspirer et délivrer une quantité réglable de liquide, dans lequel le cylindre (8) est fixé à un bloc de soupapes (3) comportant une soupape d'aspiration (5) et une soupape de délivrance (6) et qui est entouré en formant un espace circulaire (18) par une enveloppe cylindrique (17), et dans lequel est disposé dans l'espace circulaire entre le cylindre (8) et l'enveloppe cylindrique (17) une butée réglable (21) ainsi qu'une contre-butée (19) interactive avec cette dernière afin de modifier la limite de course et la quantité de liquide à aspirer et à délivrer, la butée réglable (21) étant formée pour être fixée au moyen d'un dispositif d'encliquetage élastique (27) dans chacune de plusieurs positions de réglable, caractérisé en ce que la contre-butée est formée comme calibre à crans (19) et que la butée réglable (21) est raccordée au cylindre (8) de manière immobile dans le sens axial et pour modifier la limite de course dans le sens de la périphérie de l'appareil (1) peut être pivotée.

2. Dispositif de dosage selon revendication 1 caractérisé en ce que la butée réglable (21) est formée sur un anneau de réglage (20) qui est placé sur le bord périphérique supérieur de l'enveloppe cylindrique qui est fermement raccordée au bloc de soupapes (3) pour constituer une enveloppe (17) de protection pour le cylindre (8).

3. Dispositif de dosage selon revendication 2 caractérisé en ce que l'anneau de réglage (20) porte un anneau gradué ne pouvant être tourné.

4. Dispositif de dosage selon revendication 3 caractérisé en ce que pour chacune des quantités de liquide inscrite sur l'anneau gradué (25) deux éléments à ressort (27) déphasés de 180° et disposés dans des perçages de l'anneau de réglage (20) s'engagent dans des creux qui sont formés dans un fond (32) ondulé d'une rainure (31) placée en face de l'enveloppe de protection (17).

5. Dispositif de dosage selon l'une des revendications 1 à 4 caractérisé en ce que le calibre à crans (19) servant de contre-butée est guidé au moyen de deux nez (22) dans deux rainures longitudinales (29, 30) de l'enveloppe de protection (17) de manière à ne pas pouvoir être tourné.

6. Dispositif de dosage selon l'une des revendications précédentes caractérisé en ce que les surfaces de butée des corps de butée (19, 21) s'étendent à angle droit par rapport à la direction de la force de levée.

7. Dispositif de dosage selon l'une des revendications précédentes caractérisé en ce que les éléments de butée (19, 21) consistent en sulfure de polyphénylène renforcé de fibres de verre.

8. Dispositif de dosage selon l'une des revendications précédentes caractérisé en ce que le cylindre (8) consiste en verre de borosilicate calibré et est évasé à l'extrémité supérieure et poli à la flamme.

9. Dispositif de dosage selon l'une des revendications précédentes caractérisé en ce que le bloc de soupapes (3) et la partie de dosage (8, 16, 17, 19, 20, 21, 24) sont raccordés par l'intermédiaire d'une fermeture à baïonnette.

FIG.1

FIG. 2

**FIG.3**

**FIG.4**

**FIG.5**